# EUROPEAN PATENT APPLICATION

(11) **EP 1 557 434 A1**
(43) Date of publication of application: **27.07.2005**
(21) Application number: 04025380.9
(22) Date of filing: 26.10.2004
(51) Int. Cl.: C08F 2/22

(54) **Method of making emulsion coating containing solid crosslinking agent**

(30) Priority: 25.11.2003 US 723899
(71) Applicant: BASF CORPORATION, Southfield, MI 48034-2442 (US)
(72) Inventor: Tazzia, Charles L., Grosse Pointe Farms, Michigan 48236 (US)
(74) Representative: Fischer, Jens-Dieter, Dr.

(57) **Abstract**

An aqueous coating composition is prepared by dissolving a solid curing agent in polymerizable ethylenically unsaturated monomers and then emulsion polymerizing the monomers to form a polymer having groups reactive with the curing agent. An aqueous coating composition containing a solid crosslinker, for example a solid uretdione compound or other solid blocked isocyanate crosslinker, may be prepared in this way. Aqueous, thermosettable coating compositions so prepared may be applied to an article and cured to form a cured coating on the article.

## Description

### FIELD OF THE INVENTION

The invention relates methods for preparing of thermosetting aqueous coatings, particularly methods involving emulsion polymerization.

### BACKGROUND OF THE INVENTION

Curable, or thermosettable, aqueous coating compositions have been increasingly used to meet legal restrictions on organic solvent emissions, particularly for primers and topcoats in the automotive and industrial coatings industry. Aqueous coatings are used in a variety of applications in the automotive coatings industry. They advantageously provide reduced organic emissions, lower toxicity, and reduced fire hazard . The aqueous coatings are, in general, "dispersions" or two-phase systems of a finely divided solid or liquid in a continuous medium. As used herein, "dispersion" refers to two-phase systems of one or more finely divided solids, liquids or mixtures thereof, in a continuous liquid medium such as water or a mixture of water and organic cosolvent. "Emulsion" as used herein refers to a dispersion of liquid droplets in a liquid medium, preferably water or a mixture of water and various cosolvents.

Many coating compositions employ blocked crosslinkers, such as polyisocyanate crosslinkers, or etherified melamines to react with hydroxyl or amine functional groups on the film-forming resin. The isocyanate crosslinkers are blocked with a compound such as an oxime, caprolactam, or an alcohol that unblocks and volatilizes during cure to provide the lowest temperatures for the unblocking and curing reactions. The volatile blocking agents released during cure can cause other deleterious effects on various coating properties, however, and increase organic emissions. Similarly, reaction of the etherified melamines involves displacement and volatilization of the etherifying alcohol. There is thus a need for aqueous coating compositions that avoid the problems that now accompany compositions having curing agents that release volatile by-products during the curing step.

In recent years, waterborne basecoat compositions, in particular, have gained prominence. Basecoat-clearcoat composite coatings are particularly useful as topcoats for which exceptional gloss, depth of color, distinctness of image, or special metallic effects are desired. Waterborne basecoat compositions have been prepared by different methods. One method to prepare the basecoat is by emulsion polymerizing an acrylic polymer and combining the emulsion polymer with other materials, such as pigments and a water-dispersible crosslinker. Grolemund et al., in WO 01/34681, describe aqueous dispersions of a polymer of polymerizable ethylenically unsaturated monomers and reactive organopolysiloxanes, along with a hydrophobic crosslinking agent. The disclosed examples of hydrophobic crosslinking agent are liquids. The dispersion is prepared by mixing ethylenically unsaturated monomer, the organopolysiloxane, the aqueous medium, and the crosslinker with high shear, then polymerizing the monomer.

One type of preferred crosslinking agents, blocked polyisocyanates, are generally solids, particularly those that provide harder cured films. It would also be desirable to have a method of making an aqueous coating composition with a solid curing agent, particularly a curing agent that reacts without releasing volatile organic by-products.

### SUMMARY OF THE INVENTION

In one aspect, the invention provides a method of preparing an aqueous coating composition in which a solid curing agent is dissolved in polymerizable ethylenically unsaturated monomers, and the monomers are then emulsion polymerized to form a polymer having groups reactive with the curing agent.

Also provided is a method of preparing an aqueous coating composition in which a uretdione compound or other solid blocked polyisocyanate compound is dissolved in polymerizable ethylenically unsaturated monomers, and the monomers are then emulsion polymerized to form an active-hydrogen functional polymer.

Further provided is an aqueous, thermosettable coating composition containing an emulsion copolymer and a stably dispersed solid curing agent for the emulsion copolymer. The coating composition is applied to an article and cured to form a cured coating on the article.

Still further provided is an aqueous, thermosettable coating composition containing an active hydrogen-functional emulsion copolymer and a uretdione compound or other solid blocked polyisocyanate compound. The coating composition is applied to an article and cured to form a cured coating on the article.

"A" and "an" as used herein indicate "at least one" of the item is present; a plurality of such items may be present, when possible. "About" when applied to values indicates that the calculation or the measurement allows some slight imprecision in the value (with some approach to exactness in the value; approximately or reasonably close to the value; nearly). If, for some reason, the imprecision provided by "about" is not otherwise understood in the art with this ordinary meaning, then "about" as used herein indicates a possible variation of up to 5% in the value.

### DETAILED DESCRIPTION OF THE PREFERRED EMBODIMENTS

The following description of the preferred embodiment(s) is merely exemplary in nature and is in no way intended to limit the invention, its application, or uses.

An aqueous coating composition is prepared by dissolving a solid curing agent in polymerizable ethylenically unsaturated monomers and then emulsion polymerizing the monomers to form a polymer having groups reactive with the curing agent. Groups that may be reactive with the curing agent include, without limitation, active hydrogen groups, oxirane groups, carbodiimide groups, and acetoacetoxy groups. Examples of active hydrogen-functional monomers include, without limitation, hydroxyl-functional monomers such as hydroxyethyl acrylate, hydroxyethyl methacrylate, hydroxypropyl acrylate, hydroxypropyl methacrylate, hydroxybutyl acrylates, and hydroxybutyl methacrylates; acid-functional monomers including acrylic acid, methacrylic acid, and crotonic acid; and carbamate- and urea-functional monomers or monomers with functional groups that are converted to carbamate or urea groups after polymerization such as, without limitation, those disclosed in U.S. Patent 5,866,259, "Primer Coating Compositions Containing Carbamate-Functional Acrylic Polymers," the entire disclosure of which is incorporated herein by reference. Examples of other monomers that can be used to provide crosslinkable functionality include, without limitation, glycidyl acrylate, glycidyl methacrylate, acetoacetoxybutyl methacrylate, acetoacetoxyethyl acrylate, and carbodiimide methacrylate. Preferably, a sufficient amount of the monomer providing reactive groups is included to produce an equivalent weight of 1000 or less grams per equivalent, more preferably 800 or less grams per equivalent, and even more preferably 600 or less grams per equivalent.

In one preferred embodiment, the emulsion polymer forms an anionic dispersion. Examples of suitable acid-functional monomers include, without limitation, α,β-ethylenically unsaturated monocarboxylic acids containing 3 to 5 carbon atoms, α,β-ethylenically unsaturated dicarboxylic acids containing 4 to 6 carbon atoms and the anhydrides and monoalkyl esters of these. Examples include, without limitation, acrylic acid, methacrylic acid, crotonic add, maleic acid or maleic anhydride, fumaric acid, itaconic acid or itaconic anhydride, acryloxypropionic acid, and so on. A sufficient amount of acid-functional monomer is included to produce an emulsion polymer with an acid number of at least about 1, and preferably the emulsion polymer has an acid number of from about 1 to about 10.

Example of comonomers that may be polymerized with the monomer providing reactive groups and (if included) the acid-functional monomer include, without limitation, derivatives of α,β-ethylenically unsaturated monocarboxylic acids containing 3 to 5 carbon atoms, including esters, nitriles, or amides of those acids; diesters of α,β-ethylenically unsaturated dicarboxylic acids containing 4 to 6 carbon atoms; vinyl esters, vinyl ethers, vinyl ketones, vinyl amides, and aromatic or heterocyclic aliphatic vinyl compounds. Representative examples of acrylic and methacrylic acid amides and aminoalkyl amides include, without limitation, such compounds as acrylamide, N-(1,1-dimethyl-3-oxobutyl)-acrylamide, N-alkoxy amides such as methylolamides; N-alkoxy acrylamides such as n-butoxy acrylamide; N-aminoalkyl acrylamides or methacrylamides such as aminomethylacrylamide, 1-aminoethyl-2-acrylamide, 1-aminopropyl-2-acrylamide, 1-aminopropyl-2-methacrylamide, N-1-(N-butylamino)propyl-(3)-acrylamide and 1-aminohexyl-(6)-acrylamide and 1-(N,N-dimethylamino)-ethyl-(2)-methacrylamide, 1-(N,N,-dimethylamino)-propyl-(3)-acrylamide and 1-(N, N-dimethylamino)-hexyl-(6)-methacrylamide.

Representative examples of esters of acrylic, methacrylic, and crotonic acids include, without limitation, those esters from reaction with saturated aliphatic and cycloaliphatic alcohols containing 1 to 20 carbon atoms, such as methyl, ethyl, propyl, isopropyl, n-butyl, isobutyl, tert-butyl, 2-ethylhexyl, lauryl, stearyl, cyclohexyl, trimethylcyclohexyl, tetrahydrofurfuryl, stearyl, sulfoethyl, and isobornyl acrylates, methacrylates, and crotonates; and polyalkylene glycol acrylates and methacrylates.

Representative examples of vinyl monomers that can be copolymerized indude, without limitation, such compounds as vinyl acetate, vinyl propionate, vinyl ethers such as vinyl ethyl ether, vinyl and vinylidene halides, and vinyl ethyl ketone. Representative examples of aromatic or heterocyclic aliphatic vinyl compounds include, without limitation, such compounds as styrene, α-methyl styrene, vinyl toluene, tert-butyl styrene, and 2-vinyl pyrrolidone.

A solid curing agent is dissolved in the polymerizable ethylenically unsaturated monomers. Examples of suitable solid curing agents include, without limitation, solid blocked polyisocyanate compounds such as uretdione compounds, caprolactam- and oxime-blocked diisocyanates, isocyanurates of diisocyanates, and diioscyanates half-blocked with polyols. Polyisocyanate compounds are commercially available from, among others, Degussa Corporation and Bayer Polymers LLC.

In one embodiment, a uretdione compound is combined with the polymerizable, ethylenically unsaturated monomers. Uretdione compounds are formed by condensing an aromatic diisocyanate in the presence of a phosphine or pyridine catalyst or an aliphatic diisocyanate in the presence of a hexamethyl phosphorous triamide catalyst. An oligomeric crosslinker is prepared by further reaction with a diol to provide a product comprising a structure of: 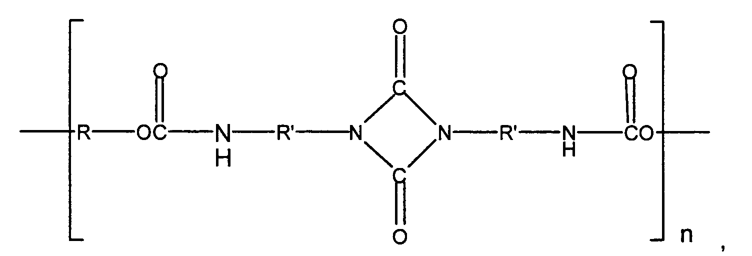 wherein R is the divalent residue of the diol, R' is the divalent residue of the diisocyanate, and n is an integer of 1 to about 50. The product is a solid at room temperature. In other embodiments, n from 1 to about 20, more preferably from about 3 to about 16. Typically, the uretdione compound may have an equivalent weight of from about 250 to about 350. Uretdione oligomers are commercially available from Degussa Corporation, Downers Grove, IL, for example Vestagon BF1350, and from Bayer Polymers LLC, Pittsburgh, PA.

The diisocyanate may be aromatic, aliphatic, and cycloaliphatic polyisocyanates and combinations thereof. Representative of useful diisocyanates are m-phenylene diisocyanate, 2,4-toluene diisocyanate, 2,6-toluene diisocyanate, mixtures of 2,4- and 2,6-toluene diisocyanate, hexamethylene diisocyanate, tetramethylene diisocyanate, cyclohexane-1,4-diisocyanate, any of the isomers of hexahydrotoluene diisocyanate, isophorone diisocyanate, any of the isomers of hydrogenated diphenylmethane diisocyanate, naphthalene-1,5-diisocyanate, 1-methoxyphenyl-2,4-diisocyanate, any of the isomers of diphenylmethane diisocyanate, including 2,2'-diphenylmethane diisocyanate, 2,4'-diphenylmethane diisocyanate, and 4,4'-diphenylmethane diisocyanate, isomers of biphenylene diisocyanate including 2,2'-, 2,4'-, and 4.4'-biphenylene diisocyanates, 3,3'-dimethoxy-4,4'-biphenyl diisocyanate, 3,3'-dimethyl-diphenylmethane-4,4'-diisocyanate, and combinations of these.

Examples of suitable diols in producing the blocked uretdione compounds described above include, without limitation, ethylene glycol, diethylene glycol, and higher polyethylene glycol analogs like triethylene glycol; propylene glycol, dipropylene glycol, and higher polypropylene glycol analogs like tripropylene glycol; 1,4-butanediol, 1,3-butanediol, 1,6-hexanediol, and so on, as well as combinations of such diols.

In another embodiment, a solid, blocked diisocyanate or isocyanurate of a diisocyanate is combined with the polymerizable, ethylenically unsaturated monomers. The diisocyanate may be aromatic, aliphatic, and cycloaliphatic polyisocyanates and combinations thereof, such as the examples mentioned above. An example of a solid, blocked diisocyanate is caprolactam-blocked diphenylmethane diisocyanate. An example of a solid, blocked isocyanurate of a diisocyanate is the caprolactam-blocked isocyanurate of isophorone diisocyanate.

In yet another embodiment, a solid, blocked polyisocyanate prepared by reacting one isocyanate group of a diisocyanate with a polyol, then blocking the remaining isocyanate group. The diisocyanate may be aromatic, aliphatic, and cycloaliphatic polyisocyanates and combinations thereof, such as the examples mentioned above. An example of such a blocked isocyanate compound is the caprolactam blocked product of 2 moles of isophorone diisocyanate reacted with one mole of a diol of sufficient molecular weight to produce a solid product.

In preferred embodiments, the blocked isocyanate crosslinker or other solid curing agent is at least about 5%, more preferably at least about 10% by weight of the nonvolatile vehicle. "Nonvolatile vehicle" refers to the film-forming components. It is also preferred for the solid crosslinker to be up to about 40%, more preferably up to about 30% by weight of the nonvolatile vehicle. The solid crosslinker is preferably from about 5% to about 40%, more preferably from about 10% to about 35%, and still more preferably from about 15% to about 35% by weight of the nonvolatile vehicle.

Emulsion polymerization techniques are well-known and described in many references. Mini-emulsion and micro-emulsion techniques, which use shear to form very small monomer droplets, have been employed for emulsion polymerization of more hydrophobic monomer mixtures. These techniques are explained in more detail in U.S. Patents No. 5,969.030, 5,786,420, and 5,569,715, incorporated herein by reference. The mini-emulsion technique provides droplets in the range of 50 to 500 nanometers, while the micro-emulsion technique uses a co-surfactant to achieve monomer droplets in the range of 50 to 100 nm.

The emulsion polymerization may be carried out by a high stress technique. First, the ethylenically unsaturated monomers and dissolved solid crosslinker are thoroughly mixed with the aqueous medium. Preferably, the monomer-crosslinker solution is substantially free of organic solvent. The aqueous mixture is then subjected to high shear conditions in order to break it into microparticles that are of a uniformly fine particle size. The mixture is subjected to a stress sufficient to result in an emulsion such that after polymerization less than 20 percent of the polymer microparticles have a mean diameter greater than 5 microns. The high shear conditions may be attained not only by high stress techniques, such as by the liquid-liquid impingement techniques discussed in detail below, but also by high speed shearing by mechanical means.

The aqueous medium is generally exclusively water, but a minor amount of organic solvent can be used. Examples of suitable organic solvents include, without limitation, xylene, methyl isobutyl ketone, mineral spirits, butanol, butyl acetate, tributyl phosphate and dibutyl phthalate.

The mixture is preferably subjected to the appropriate stress by use of a MICROFLUIDIZER® emulsifier which is available from Microfluidics Corporation in Newton, Mass. The MICROFLUIDIZER® high-pressure impingement emulsifier is disclosed in U.S. Pat. No. 4,533,254, which is hereby incorporated by reference. The device consists of a high-pressure (up to 1.4 x 10⁵ kPa (20,000 psi)) pump and an interaction chamber in which emulsification takes place. The pump forces the mixture of reactants in aqueous medium into the chamber where it is split into at least two streams that pass at high velocity through at least two slits and collide, resulting in the division of the mixture into small droplets. Generally, the reaction mixture is passed through the emulsifier once at a pressure of between 3.5 x 10⁴ and 1 x 10⁵ kPa (5,000 and 15,000 psi). Multiple passes can result in smaller average particle size and a narrower range for the particle size distribution. An alternative manner of applying stress is by ultrasonic energy.

Once the mixture has been particulated into microparticles, the polymerizable monomers within each particle are polymerized to produce polymer microparticles stably dispersed in the aqueous medium. Preferably, a surfactant or dispersant is present to stabilize the dispersion. Examples of suitable surfactants include, without limitation, the dimethylethanolamine salt of dodecylbenzene sulfonic acid, sodium dioctylsulfosuccinate, ethoxylated nonylphenol and sodium dodecylbenzene sulfonate. Generally, both ionic and non-ionic surfactants may be used together and the amount of surfactant may be from 1 percent to 10 percent, preferably from 2 percent to 4 percent, based on the total solids.

A free-radical initiator is usually present. Both water-soluble and oil-soluble initiators can be used, including redox initiators. Examples of water-soluble initiators include ammonium peroxydisulfate, potassium peroxydisulfate and hydrogen peroxide. Examples of oil-soluble initiators include t-butyl hydroperoxide, dilauryl peroxide, t-butyl peroxy 2-ethylhexanoate, and 2,2'-azobis(isobutyronitrile). Preferably, redox initiators such as ammonium peroxydisulfate/sodium metabisulfite or t-butylhydroperoxide/isoascorbic acid are used.

The aqueous microparticle dispersions may be prepared by a batch process, semi-batch process, or continuous process. In one example, the unreacted microdispersion is introduced over a period of 1 to 4 hours into a heated reactor initially charged with water and optionally surfactant. The initiator can be fed in simultaneously, it can be part of the microdispersion or it can be charged to the reactor before feeding in the microdispersion. Alternatively, a reactor may be charged with the entire amount of microdispersion to be polymerized. Polymerization may be commenced by adding an appropriate initiator such as a redox initiator. In yet another example, a pre-emulsion is passed through the homogenizer to make the microdispersion, which is immediately passed through a heated tube, e.g., stainless steel, or a heat exchanger in which polymerization takes place. The initiator, preferably a redox initiator system, is added to the microdispersion just before it enters the tubing.

The coating composition may include a catalyst to enhance the cure reaction, for example, Lewis acids, zinc salts, and tin salts. An organic solvent or solvents may be utilized in the coating composition. In general, though, organic solvent is avoided to minimize organic volatile emissions from the coating process. Examples of useful solvents include, without limitation, ethylene glycol butyl ether, propylene glycol monophenyl ether, propylene glycol monomethyl ether acetate, xylene, N-methylpyrrolidone, and so on. In another preferred embodiment,

When the coating composition is a primer composition or pigmented topcoat composition, such as a basecoat composition, one or more pigments and/or fillers may be included. Pigments and fillers may be utilized in amounts typically of up to 40% by weight, based on total weight of the coating composition. The pigments used may be inorganic pigments, including metal oxides, chromates, molybdates, phosphates, and silicates. Examples of inorganic pigments and fillers that could be employed are titanium dioxide, barium sulfate, carbon black, ocher, sienna, umber, hematite, limonite, red iron oxide, transparent red iron oxide, black iron oxide, brown iron oxide, chromium oxide green, strontium chromate, zinc phosphate, silicas such as fumed silica, calcium carbonate, talc, barytes, ferric ammonium ferrocyanide (Prussian blue), ultramarine, lead chromate, lead molybdate, and mica flake pigments. Organic pigments may also be used. Examples of useful organic pigments are metallized and non-metallized azo reds, quinacridone reds and violets, perylene reds, copper phthalocyanine blues and greens, carbazole violet, monoarylide and diarylide yellows, benzimidazolone yellows, tolyl orange, naphthol orange, and the like. Metallic or other inorganic flake materials may also be used, such as pearlescent mica flake pigments or metallic flake pigments such as aluminum flake pigments,

Additional agents, for example hindered amine light stabilizers, ultraviolet light absorbers, anti-oxidants, rheology control agents, adhesion promoters, and so on may be incorporated into the coating composition. Such additives are well-known and may be included in amounts typically used for coating compositions.

The coating composition preferably has a very low content of volatile of organic solvent, and is preferably a solvent free or substantially solvent free dispersion. By "substantially solvent free" it is meant that the dispersion has a volatile organic content of less than about 5% by weight of the coating composition. The coating composition preferably has a volatile organic content of less than about 1.5, more preferably less than about 1.3, and even more preferably less than about 0.7. The volatile organic content of a coating composition is typically measured using ASTM D3960.

Coating compositions can be coated on an article by any of a number of techniques well-known in the art. These include, for example, electrodeposition, spray coating, dip coating, roll coating, curtain coating, and the like. For automotive application, electrodeposition coating and spray coating are preferred. In a particular embodiment, the coating composition of the invention is electrodepositable and is coating onto the substrate by electrodeposition. The electrodeposited or applied coating layer is cured by reaction of the active hydrogen-functional resin with the uretdione compound to produce a cured coating layer on the substrate.

The coating composition can be applied onto many different substrates, including metal substrates such as bare steel, phosphated steel, galvanized steel, or aluminum; and non-metallic substrates, such as plastics and composites. The substrate may also be any of these materials having upon it already a layer of another coating, such as a layer of an electrodeposited primer, primer surfacer, and/or basecoat, cured or uncured.

The applied coating layer is cured by reaction of the polymer with the solid curing agent to produce a cured coating layer on the article. Although various methods of curing may be used, heat-curing is preferred. Generally, heat curing is effected by heating at a temperature and for a length of time sufficient to cause the reactants to form an insoluble polymeric network. The cure temperature is usually from about 150° C. to about 200° C., and the length of cure is usually about 15 minutes to about 60 minutes. Heating can be done in infrared and/or convection ovens.

The invention is further described in the following examples. The examples are merely illustrative and do not in any way limit the scope of the invention as described and claimed. All parts are parts by weight unless otherwise noted.

### Example

A reactor is charged with 118.6 parts by weight deionized water and 3.26 parts by weight ABEX EP-110 (obtained from Rhodia, Cranbury, NJ). The flask contents are stirred under a nitrogen blanket and heated to 80°C. In a separate container, 93 parts by weight VESTAGON EP-B1400 (obtained from Degussa Corporation, Downers Grove, IL) is dissolved in a mixture of 58.4 parts by weight 2-ethylhexyl methacrylate, 50.0 parts by weight hydroxyethyl methacrylate, 48.0 parts by weight lauryl methacrylate, 6.0 parts by weight acrylic acid, and 1.8 parts by weight octyl mercaptan. This monomer mixture is then emulsified to a fine droplet size in a mixture of 265 parts by weight deionized water and 29.9 parts by weight ABEX EP-110. Next, 1 part by weight ammonium persulfate in into parts by weight deionized water is added to the emulsion. The emulsion is added to the reactor at a constant rate over about three hours, with the contents of the reactor being maintained between 80 and 82°C. The add line is flushed with a solution of 0.2 parts by weight ammonium persulfate in 22 parts by weight deionized water. The contents of the flask were held for an additional 90 minutes at about 80°C. The product emulsion was cooled and neutralized with dilute aminomethylpropanol.

The product emulsion is pigmented with a pigment dispersion of titanium dioxide, carbon black, and a filler pigment. The mixture is diluted with deionized water to an aqueous bath of about 20% nonvolatile content by weight. A phosphated steel panel is suspended in a container of the mixture. Electrical leads are attached to a steel rod as anode and the panel as cathode. Current is passed through the bath to deposit a coating layer on the panel. The panel is removed from the bath, rinsed, and baked in a 175°C oven for 30 minutes to produce a cured coating on the panel.

The description of the invention is merely exemplary in nature and, thus, variations that do not depart from the gist of the invention are intended to be within the scope of the invention. Such variations are not to be regarded as a departure from the spirit and scope of the invention.

## Claims

1. A method of preparing an aqueous coating composition, comprising steps of:
dissolving a solid curing agent in polymerizable ethylenically unsaturated monomers and
emulsion polymerizing the monomers to form a polymer having groups reactive with the curing agent.

2. A method of preparing an aqueous coating composition, comprising steps of:
dissolving a uretdione compound in polymerizable ethylenically unsaturated monomers and
emulsion polymerizing the monomers to form an active-hydrogen functional polymer.

3. A method of preparing an aqueous coating composition, comprising steps of:
dissolving a solid blocked polyisocyanate compound in polymerizable ethylenically unsaturated monomers and
emulsion polymerizing the monomers to form a polymer having groups reactive with the blocked polyisocyanate compound.

4. A method according to claim 3, wherein the polymer has hydroxyl groups.

5. An aqueous, thermosettable coating composition prepared according to the method of claim 1.

6. An aqueous, thermosettable coating composition prepared according to the method of claim 2.

7. An aqueous, thermosettable coating composition prepared according to the method of claim 3.

8. A method of coating an article, comprising applying a layer of the coating composition of claim 5 to an article and curing the applied layer to form a cured coating on the article.

9. A method of coating an article, comprising applying a layer of the coating composition of claim 6 to an article and curing the applied layer to form a cured coating on the article.

10. A method of coating an article, comprising applying a layer of the coating composition of claim 7 to an article and curing the applied layer to form a cured coating on the article.

11. A coated article prepared according to the method of claim 8.

12. A coated article prepared according to the method of claim 9.

13. A coated article prepared according to the method of claim 10.
